(19) Europäisches Patentamt / European Patent Office / Office européen des brevets

(11) **EP 3 377 211 B1**

(12) **EUROPÄISCHE PATENTSCHRIFT**

(45) Veröffentlichungstag und Bekanntmachung des Hinweises auf die Patenterteilung:
**31.05.2023   Patentblatt 2023/22**

(21) Anmeldenummer: **16797852.7**

(22) Anmeldetag: **15.11.2016**

(51) Internationale Patentklassifikation (IPC):
**B01J 8/24** (2006.01)     **C08F 2/34** (2006.01)
**B01J 19/24** (2006.01)     **B01J 4/00** (2006.01)
**C08F 20/14** (2006.01)     **B01J 2/04** (2006.01)

(52) Gemeinsame Patentklassifikation (CPC):
**B01J 2/04; B01J 4/002; B01J 19/24; C08F 2/34; C08F 20/14;** B01J 2219/00414; B01J 2219/0072; B01J 2219/185

(86) Internationale Anmeldenummer:
**PCT/EP2016/077774**

(87) Internationale Veröffentlichungsnummer:
**WO 2017/085081 (26.05.2017 Gazette 2017/21)**

(54) **VORRICHTUNG ZUR HERSTELLUNG VON PULVERFÖRMIGEM POLY(METH)ACRYLAT**

DEVICE FOR PRODUCING POLY(METH)ACRYLATE IN POWDER FORM

DISPOSITIF SERVANT À PRODUIRE DU POLY(MÉTH)ACRYLATE PULVÉRULENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.11.2015   EP 15194980**

(43) Veröffentlichungstag der Anmeldung:
**26.09.2018   Patentblatt 2018/39**

(73) Patentinhaber: **BASF SE**
**67056 Ludwigshafen am Rhein (DE)**

(72) Erfinder:
• **KRUEGER, Marco**
**68219 Mannheim (DE)**
• **POSSEMIERS, Karl**
**2970A ´S Gravenwezel (BE)**
• **GRUENEWALD, Gerald**
**2018Z Antwerpen 1 (BE)**
• **FREIBERG, Juergen**
**68623 Lampertheim (DE)**
• **MUEHL, Markus**
**55278 Mommenheim (DE)**

(74) Vertreter: **BASF IP Association**
**BASF SE**
**GBI-C006**
**67056 Ludwigshafen (DE)**

(56) Entgegenhaltungen:
WO-A1-2011/026876     US-A1- 2009 214 395

**Beschreibung**

Die Erfindung geht aus von einer Vorrichtung zur Herstellung von pulverförmigem Poly(meth)acrylat, umfassend einen Reaktor zur Tropfenpolymerisation mit einer Vorrichtung zur Vertropfung einer Monomerlösung für die Herstellung des Poly(meth)acrylats mit Löchern, durch die die Monomerlösung eingebracht wird, einer Zugabestelle für ein Gas oberhalb der Vorrichtung zur Vertropfung, mindestens einer Gasentnahmestelle am Umfang des Reaktors, einer Wirbelschicht und einer Vorrichtung zum Produktaustrag aus der Wirbelschicht.

Poly(meth)acrylate finden Anwendung insbesondere als wasserabsorbierende Polymere, die beispielsweise bei der Herstellung von Windeln, Tampons, Damenbinden und anderen Hygieneartikeln oder auch als wasserzurückhaltende Mittel im landwirtschaftlichen Gartenbau verwendet werden.

Die Eigenschaften der wasserabsorbierenden Polymere können über den Vernetzungsgrad eingestellt werden. Mit steigendem Vernetzungsgrad steigt die Gelfestigkeit und sinkt die Absorptionskapazität. Dies bedeutet, dass mit steigender Absorption unter Druck die Zentrifugenretentionskapazität abnimmt, wobei bei sehr hohen Vernetzungsgraden auch die Absorption unter Druck wieder abnimmt.

Zur Verbesserung der Anwendungseigenschaften, beispielsweise der Flüssigkeitsleitfähigkeit in der Windel und der Absorption unter Druck, werden wasserabsorbierende Polymerpartikel im Allgemeinen nachvernetzt. Dadurch steigt nur der Vernetzungsgrad an der Partikeloberfläche, wodurch die Absorption unter Druck und die Zentrifugenretentionskapazität zumindest teilweise entkoppelt werden können. Diese Nachvernetzung kann in wässriger Gelphase durchgeführt werden. Im Allgemeinen werden aber gemahlene und abgesiebte Polymerpartikel an der Oberfläche mit einem Nachvernetzer beschichtet, thermisch nachvernetzt und getrocknet. Dazu geeignete Vernetzer sind Verbindungen, die mindestens zwei Gruppen enthalten, die mit den Carboxylatgruppen des hydrophilen Polymeren kovalente Bindungen bilden können.

Zur Herstellung der wasserabsorbierenden Polymerpartikel sind unterschiedliche Verfahren bekannt. So können zum Beispiel die zur Herstellung von Poly(meth)acrylaten eingesetzten Monomere und gegebenenfalls Additive einem Mischkneter zugegeben werden, in dem die Monomere zum Polymer reagieren. Durch rotierende Wellen mit Knetbarren im Mischkneter wird das entstehende Polymer in Brocken zerrissen. Das dem Kneter entnommene Polymer wird getrocknet und gemahlen und einer Nachbearbeitung zugeführt. In einer alternativen Variante wird das Monomer in Form einer Monomerlösung, die auch weitere Additive enthalten kann, in einen Reaktor zur Tropfenpolymerisation eingebracht. Beim Einbringen der Monomerlösung in den Reaktor zerfällt diese in Tropfen. Bei dem Mechanismus der Tropfenbildung kann es sich um turbulenten oder laminaren Strahlzerfall oder aber auch um Vertropfung handeln. Der Mechanismus der Tropfenbildung hängt dabei von den Eintrittsbedingungen und den Stoffeigenschaften der Monomerlösung ab. Die Tropfen fallen im Reaktor nach unten, wobei das Monomer zum Polymer reagiert. Im unteren Bereich des Reaktors befindet sich eine Wirbelschicht, in die die durch die Reaktion aus den Tropfen entstehenden Polymerpartikel fallen. In der Wirbelschicht findet dann eine Nachreaktion statt. Entsprechende Verfahren sind zum Beispiel in der WO-A 2006/079631, der WO-A 2008/086976, der WO-A 2007/031441, der WO-A 2008/040715, der WO-A 2010/003855 und der WO-A 2011/026876 beschrieben.

Bei den beschriebenen Reaktoren zur Tropfenpolymerisation wird Gas an zwei Stellen zugegeben. Ein erster Gasstrom wird oberhalb der Vorrichtung zur Vertropfung eingeleitet und ein zweiter Gasstrom von unten durch die Wirbelschicht. Die Strömungsrichtung der Gasströme ist dabei entgegengesetzt. Über den Ringkanal, der durch den in den Bereich mit abnehmendem hydraulischem Durchmesser hineinragenden Reaktormantel gebildet wird, wird das Gas aus dem Reaktor abgezogen. Hierbei muss die gesamte dem Reaktor zugeführte Gasmenge abgeführt werden. Dies führt zu hohen Gasgeschwindigkeiten im Bereich des Ringkanals, wobei die Gasgeschwindigkeiten so hoch sein können, dass Polymermaterial mit dem Gas über den Ringkanal mitgerissen wird. Dies führt zum Einen zu einer Verringerung der Ausbeute, zum Anderen besteht die Gefahr, dass die mitgerissenen Partikel durch noch nicht vollständig ausreagierte Monomerlösung an Wandungen des Ringkanals und der nachfolgenden gasführenden Leitungen anhaften können und so zu unerwünschten Ablagerungen führen.

Um die Entstehung eines explosiven Gemischs im Reaktor zu verhindern, wird als Gas im Allgemeinen Stickstoff eingesetzt. Bei üblichen Vorrichtungen zum Produktaustrag, durch die der hergestellte Feststoff entnommen wird, zum Beispiel beim Einsatz von Zellradschleusen, geht üblicherweise auch kontinuierlich ein Teil des Gases aus dem Reaktor verloren oder es dringt Gas, insbesondere Luft, je nach vorliegendem Druckgefälle, aus daran angeschlossenen Anlagenteilen in den Reaktor ein. Insbesondere bei einer Atmosphäre im Reaktor, die verschieden ist von Luft, so zum Beispiel beim Einsatz von Stickstoff oder auch anderen gegenüber den im Reaktor enthaltenen Komponenten inerten Gasen, ist ein solcher Verlust beziehungsweise das Eindringen von Luft und Sauerstoff in den Reaktor jedoch unerwünscht, da entsprechend erhöhte Verbrauchsmengen an Inertgas in das System zugeführt werden müssen um den Reaktor im gewünschten Inertbereich zu halten, wobei der Inertbereich durch eine vorgegebene maximale Sauerstoffkonzentration definiert wird.

Aufgabe der vorliegenden Erfindung ist es daher, eine Vorrichtung zur Herstellung von pulverförmigem Poly(meth)acrylat, umfassend einen Reaktor zur Tropfenpolymerisation, bereitzustellen, bei der der Verbrauch an Inertgas im Reaktor minimiert wird.

Gelöst wird die Aufgabe durch eine Vorrichtung gemäß Anspruch 1 umfassend einen Reaktor zur Tropfenpolymerisation mit einer Vorrichtung zur Vertropfung einer Monomerlösung für die Herstellung des Poly(meth)acrylats mit Löchern, durch die die Monomerlösung eingebracht wird, einer Zugabestelle für ein Gas oberhalb der Vorrichtung zur Vertropfung, mindestens einer Gasentnahmestelle am Umfang des Reaktors, einer Wirbelschicht und einer Vorrichtung zum Produktaustrag aus der Wirbelschicht, wobei die Vorrichtung zum Produktaustrag eine Austragsvorrichtung umfasst und oberhalb der Austragsvorrichtung ein Aufstausegment angeordnet ist.

Das Aufstausegment oberhalb der Austragsvorrichtung dient als Gassperre, durch die die Menge an Gas, die mit dem Feststoff durch die Austragsvorrichtung entnommen wird beziehungsweise je nach vorliegendem Druckgefälle das in den Reaktor eindringende Gas, insbesondere Luft, minimiert wird. Im Aufstausegment sammelt sich der Feststoff, wobei durch die Höhe der Feststoffsäule und den dadurch entstehenden Druck die Zwischenräume zwischen den einzelnen Feststoffpartikeln verkleinert und damit auch die Gasmenge reduziert wird, die dann mit dem Feststoff ausgetragen wird. Bei umgekehrt vorliegendem Druckgefälle wird durch die Feststoffsäule ein ausreichender Gegendruck eingestellt der das Eindringen von Gas in den Reaktor minimiert.

Ein Reaktor zur Tropfenpolymerisation umfasst im Allgemeinen ein Kopf mit einer Vorrichtung zur Vertropfung einer Monomerlösung, einen mittleren Bereich, durch den die vertropfte Monomerlösung fällt und zum Polymer umgewandelt wird und eine Wirbelschicht, in die die Polymertropfen fallen. Die Wirbelschicht schließt dabei den Bereich des Reaktors mit abnehmendem hydraulischem Durchmesser nach unten ab.

Damit die Monomerlösung, die die Vorrichtung zur Vertropfung verlässt, nicht an die Wandung des Reaktors gesprüht wird und um gleichzeitig den Reaktor sowohl statisch als auch vom Materialaufwand vorteilhaft zu gestalten, ist es bevorzugt, den Kopf des Reaktors in Form eines Kegelstumpfs auszubilden und die Vorrichtung zur Vertropfung im kegelstumpfförmigen Kopf des Reaktors zu positionieren.

Durch die kegelstumpfförmige Gestaltung des Kopfs des Reaktors kann im Vergleich zu einer zylindrischen Gestaltung Material eingespart werden. Zudem dient ein kegelstumpfförmig gestalteter Kopf zur Verbesserung der statischen Stabilität des Reaktors. Ein weiterer Vorteil ist, dass das Gas, das am Kopf des Reaktors eingebracht wird, über einen kleineren Querschnitt zugeführt werden muss und anschließend aufgrund der kegelstumpfförmigen Gestaltung ohne starke Verwirbelungen im Reaktor nach unten strömt. Die Verwirbelungen, die sich bei einer zylindrischen Gestaltung des Reaktors im Kopfbereich und einer Gaszufuhr in der Mitte des Reaktors einstellen können, haben den Nachteil, dass Tropfen, die mit der Gasströmung mitgerissen werden, aufgrund der Verwirbelungen gegen die Wandung des Reaktors transportiert werden können und so zur Belagbildung beitragen können.

Um die Höhe des Reaktors so niedrig wie möglich zu halten, ist es weiterhin vorteilhaft, wenn die Vorrichtung zur Vertropfung der Monomerlösung so weit oben wie möglich im kegelstumpfförmig gestalteten Kopf angeordnet ist. Das bedeutet, dass die Vorrichtung zur Vertropfung der Monomerlösung auf der Höhe des kegelstumpfförmig gestalteten Kopfes angeordnet ist, in der der Durchmesser des kegelstumpfförmig gestalteten Kopfes ungefähr dem Durchmesser der Vorrichtung zur Vertropfung entspricht.

Um zu vermeiden, dass die Monomerlösung, die die Vorrichtung zur Vertropfung im Bereich der äußersten Löcher verlässt, gegen die Wandung des kegelstumpfförmig gestalteten Kopfes gesprüht wird, ist es besonders bevorzugt, wenn der hydraulische Durchmesser des kegelstumpfförmig gestalteten Kopfes in der Höhe, in der der Vorrichtung zur Vertropfung angeordnet ist, 2 bis 30 %, mehr bevorzugt 4 bis 25 % und insbesondere 5 bis 20 %, größer ist als der hydraulische Durchmesser, der zu der Fläche gehört, die durch die kürzeste, die äußersten Löcher verbindende Linie umschlossen wird. Der etwas größere hydraulische Durchmesser des Kopfes stellt zudem sicher, dass Tropfen auch unterhalb des Reaktorkopfes nicht frühzeitig an die Reaktorwand prallen und dort anhaften.

Oberhalb der Vorrichtung zur Vertropfung der Monomerlösung befindet sich eine Zugabestelle für Gas, so dass Gas und Tropfen im Gleichstrom von oben nach unten durch den Reaktor strömen. Da sich im unteren Bereich des Reaktors die Wirbelschicht befindet, führt dies dazu, dass im unteren Bereich des Reaktors Gas in die entgegengesetzte Richtung von unten nach oben strömt. Da Gas sowohl von oben als auch von unten in den Reaktor eingebracht wird, ist es notwendig, das Gas zwischen der Vorrichtung zur Vertropfung der Monomerlösung und der Wirbelschicht zu entnehmen. Erfindungsgemäß ist die Gasentnahmestelle am Übergang vom Reaktormantel zum Bereich mit dem in Richtung zur Wirbelschicht abnehmendem hydraulischem Durchmesser positioniert.

Um die Feststoffmenge in der Wirbelschicht einstellen zu können, wird zum Beispiel an der Feststoffentnahmestelle an der Wirbelschicht ein einstellbares Wehr angeordnet. Der Feststoff tritt dann bei Erreichen der Oberkante des Wehres über das Wehr und gelangt in die Vorrichtung zum Produktaustrag. Über die Höhe der Wirbelschicht lässt sich die mittlere Verweilzeit der Polymerpartikel in der Wirbelschicht und damit die Zeit für die Nachvernetzung einstellen.

Im Bereich mit abnehmendem hydraulischem Durchmesser nimmt der hydraulische Durchmesser von der Gasentnahmestelle in Richtung zur Wirbelschicht von oben nach unten ab. Die Abnahme des hydraulischen Durchmessers verläuft dabei vorzugsweise linear, so dass der Bereich mit abnehmendem hydraulischem Durchmesser die Form eines umgedrehten Kegelstumpfes aufweist.

Der hydraulische Durchmesser $d_h$ berechnet sich zu:

$$d_h = 4 \cdot A/U$$

wobei A die Fläche und U der Umfang ist. Durch die Verwendung des hydraulischen Durchmessers ist die Gestaltung des Reaktors unabhängig von der Form der Querschnittsfläche. Diese kann zum Beispiel kreisförmig, rechteckig, in Form eines beliebigen Polygons, oval oder elliptisch sein. Bevorzugt ist jedoch eine kreisförmige Querschnittsfläche.

Um zu verhindern, dass eine zu große Menge an Polymer aus dem Aufstausegment entnommen wird und um weiterhin auch ein Überfüllen des Aufstausegments beziehungsweise der Wirbelschicht zu vermeiden, ist es bevorzugt, wenn das Aufstausegment mindestens einen oberen Sensor zur Erfassung eines maximalen Füllstandes und mindestens einen unteren Sensor zur Erfassung eines minimalen Füllstandes aufweist. Mit einer geeigneten Füllstandsregelung wird Polymer über die Austragsvorrichtung entnommen, wenn der im Aufstausegment enthaltene Füllstand den oberen Sensor zur Erfassung des maximalen Füllstands erreicht und die Polymerentnahme wird beendet, sobald der Füllstand den unteren Sensor zur Erfassung des minimalen Füllstandes erreicht. Darüber hinaus ist auch eine vollkontinuierliche Regelung der Austragsgeschwindigkeit durch geeignete schrittweise Anpassung derselben möglich.

In einer bevorzugten Ausführungsform ist eine Füllstandsregelung umfasst, bei der der obere Sensor einen ersten oberen Füllstand erfasst, bei dessen Erreichen der Zulauf reduziert wird und einen zweiten oberen Füllstand, bei dessen Erreichen der Zulauf geschlossen wird und der untere Sensor einen ersten unteren Füllstand erfasst, bei dessen Erreichen der Produktablauf aus der Vorrichtung zum Produktaustrag reduziert wird und einen zweiten unteren Füllstand, bei dessen Erreichen die Vorrichtung zum Produktaustrag verschlossen wird, so dass kein Produkt entnommen wird. Durch eine derartige Füllstandsregelung mit Erfassung eines ersten und eines zweiten oberen Füllstands sowie einem ersten und einem zweiten unteren Füllstand ist es möalich, die Vorrichtung zum Produktaustrag so zu betreiben, dass kontinuierlich Produkt aus dem Reaktor entnommen wird. Eine Unterbrechung der Produktentnahme ist nur dann erforderlich, wenn so wenig Polymer produziert wird, dass das Aufstausegment auch bei geringer Entnahmerate nicht ausreichend schnell wieder aufgefüllt wird. Dies kann zum Beispiel bei einer Unterbrechung der Monomerzufuhr auftreten. Weiterhin können auch kontinuierliche Füllstandssensoren verwendet werden, die anstelle von Grenzfüllständen ein kontinuierliches Füllstandssignal messen und ausgeben. Mit dem kontinuierlichen Messsignal kann dann die Austragsgeschwindigkeit direkt auf einen gewünschten Füllstand, beispielsweise 50%, geregelt werden. Geeignete kontinuierliche Füllstandssensoren sind beispielsweise kapazitive Seilsonden, Radar- oder Mikrowelleninstrumente sowie radioaktive Füllstandsmessungen.

Um zum Beispiel bei einem zu weit gefüllten Aufstausegment zu verhindern, dass weiteres Polymer in das Aufstausegment einlaufen kann, bevor dieses über die Austragsvorrichtung zur weiteren Aufnahme von Polymer entleert wurde, ist es möglich, oberhalb des Aufstausegments ein Schließelement anzuordnen. Das Schließelement kann weiterhin auch dazu genutzt werden, die Menge an Polymermaterial, die in das Aufstausegment einströmt, einzustellen. Als Schließelement, das oberhalb des Aufstausegments angeordnet werden kann, eigenen sich zum Beispiel Schieber, Klappen, Kugelhähne, Segmentkugelhähne oder Ventile. Bevorzugt als Schließelement sind Segmentkugelhähne oder Schieber.

Zur Zerkleinerung von Agglomeraten oder im Reaktor entstandener Klumpen, die beispielsweise durch Abplatzen von Ablagerungen entstehen können, ist in einer bevorzugten Ausführungsform oberhalb des Aufstausegments ein Feststoffzerkleinerer angeordnet. Als Feststoffzerkleinerer eigenen sich insbesondere Klumpenbrecher, wobei hier insbesondere Fingerbrecher mit Brechgitter und rotierendem Brechwerkzeug geeignet sind. Neben einem Fingerbrecher mit Brechgitter und rotierendem Brechwerkzeug kann jedoch auch jeder andere, dem Fachmann bekannte Klumpenbrecher als Feststoffzerkleinerer eingesetzt werden. Alternativ zu einem Klumpenbrecher können auch beliebige andere Feststoffzerkleinerer, zum Beispiel Mühlen oder Mahlwerke, eingesetzt werden.

Wenn ein Feststoffzerkleinerer und ein Schließelement eingesetzt werden, ist es vorteilhaft, das Schließelement oberhalb des Feststoffzerkleinerers anzuordnen, so dass sich der Feststoffzerkleinerer zwischen dem Schließelement und dem Aufstausegment befindet. Hierdurch ist es zum Beispiel bei einem Blockieren des Feststoffzerkleinerers möglich, die Polymerzufuhr in den Feststoffzerkleinerer zu unterbrechen und diesen zu reinigen oder zu reparieren. Auch kann bei einer zu starken Füllung des Feststoffzerkleinerers, die sich zum Beispiel durch Zugabe von großen Brocken ergeben kann, die Polymerzufuhr unterbrochen werden, um zunächst die Brocken vollständig zu zerkleinern, bevor weiteres Material in den Feststoffzerkleinerer zugeführt wird.

Als Austragsvorrichtung wird vorzugsweise eine Vorrichtung eingesetzt, mit der das Polymer gesteuert entnommen werden kann. Neben einer Polymerentnahme und einer Unterbrechung der Polymerentnahme sollte es auch möglich sein, die Geschwindigkeit, mit der das Polymer über die Austragsvorrichtung entnommen wird, einzustellen. Dies erlaubt es, den Füllstand in dem Aufstausegment unabhängig von dem in das Aufstausegment einströmenden Massenstrom an Polymeren weitgehend konstant zu halten, zum Beispiel bei Erfassung des ersten und zweiten oberen Füllstands sowie des ersten und zweiten unteren Füllstandes jeweils zwischen dem ersten oberen Füllstand und dem ersten unteren Füllstand, indem bei zunehmendem Füllstand die Austragsgeschwindigkeit erhöht und bei abnehmendem Füllstand verringert wird.

Geeignete Austragsvorrichtungen sind zum Beispiel eine Zellradschleuse, eine Klappe, ein Schneckenförderer oder ein Segmentkugelhahn. Besonders bevorzugt ist dabei die Zellradschleuse.

Zur Vermeidung von Kondensation im Aufstausegment und zur Verhinderung einer Brückenbildung, durch die das Aufstausegment blockieren kann, wobei eine Brückenbildung insbesondere auch durch Kondensation entstehen kann, ist in einer Ausführungsform der Erfindung im Aufstausegment eine Gaszufuhr angeordnet, um trockenes Gas in das Aufstausegment einzuleiten. Durch die Gaseinleitung in das Aufstausegment wird ein Aufkonzentrieren der durch Nachtrocknung des warmen Produkts entstehenden Feuchtigkeit in der Gasphase und somit Kondensation verhindert, so dass keine Feststoffbrücken entstehen können. Als Gas wird vorzugsweise trockenes oder entfeuchtetes Gas eingesetzt. Geeignete Gase sind gegenüber den eingesetzten Monomeren und den Polymeren inert. Besonders bevorzugt als Gas wird trockener Stickstoff eingesetzt.

Um zu verhindern, dass sich im Bereich der Vorrichtung zum Produktaustrag Ablagerungen bilden, die anwachsen können und so die Vorrichtung zum Produktaustrag blockieren können, ist die Vorrichtung zum Produktaustrag vorzugsweise beheizbar. Es hat sich gezeigt, dass durch eine Beheizung die Bildung von Ablagerungen, die sich insbesondere durch Anbackungen nicht vollständig auspolymerisierter oder feuchter Partikel ergeben kann, verhindert oder zumindest stark reduziert werden kann. Vorzugsweise weisen zum Produktaustrag der Feststoffzerkleinerer, das Aufstausegment und/oder die Austragsvorrichtung zur Beheizung der Vorrichtung eine elektrische Beheizung, einen Doppelmantel oder außen aufgebrachte Heizschlangen auf, wobei der Doppelmantel oder die Heizschlangen von einem Heizmedium durchströmbar sind. Als Heizmedium kann dabei jedes dem Fachmann bekannte Heizmedium eingesetzt werden. Geeignete Heizmedien sind zum Beispiel Thermalöle, Wasser oder Dampf. Besonders bevorzugt wird Dampf als Heizmedium eingesetzt.

Um zu vermeiden, dass mit dem aus dem Reaktor oberhalb der Wirbelschicht entnommenen Gasstrom Feststoff mit aus dem Prozess ausgetragen wird und so die Ausbeute reduziert wird, schließt sich vorzugsweise an die Gasentnahmestelle eine Vorrichtung zur Feinstaubabtrennung an. Als Vorrichtung zur Feinstaubabtrennung eignen sich zum Beispiel Feinstaubfilter oder Zyklone. Besonders bevorzugt als Vorrichtung zur Feinstaubabtrennung ist ein Zyklon. Der in der Vorrichtung zur Feinstaubabtrennung entfernte Feststoff kann dann aus der Vorrichtung zur Feinstaubabtrennung entnommen und entweder in den Prozess zurückgeführt oder als Produkt entnommen werden. Wenn die Größe der entnommenen Feststoffpartikel nicht der gewünschten Spezifikation entspricht, können diese aufgearbeitet werden. Bei zu großen Partikeln ist es zum Beispiel möglich, diese in einem geeigneten Feststoffzerkleinerer, beispielsweise einer Mühle zu zerkleinern. Zu kleine Partikel können in den Prozess zurückgeführt werden, so dass diese mit weiterem Monomer reagieren beziehungsweise agglomerieren und sich vergrößern.

Um zu verhindern, dass Inertgas aus dem Reaktor über die Entnahmestelle für den Feststoff aus der Feinstaubabtrennung entweichen kann beziehungsweise je nach Druckgefälle auch an dieser Stelle Luft in den Reaktor eindringen kann, ist in einer bevorzugten Ausführungsform an der Vorrichtung zur Feinstaubabtrennung, insbesondere dem Zyklon, ein Feststoffaustrag angeordnet, der eine Austragsvorrichtung und oberhalb der Austragsvorrichtung ein Schließelement umfasst. Mit der Schließvorrichtung kann der Feststoffaustrag aus der Vorrichtung zur Feinstaubabtrennung geschlossen werden, so dass nur dann Feststoff entnommen wird, wenn eine ausreichend große Menge vorliegt. Durch die nur gelegentliche Entnahme von Feststoff kann der unerwünschte Austrag an Inertgas beziehungsweise das unerwünschte Eindringen von Luft in den Reaktor minimiert werden. Das Schließelement ermöglicht zudem ein Aufstauen an Feststoff, so dass auch hierdurch eine zusätzliche Sicherung gegen die Gasentnahme beziehungsweise das Eindringen von Luft in den Reaktor gegeben ist. Das Schließelement kann insbesondere wieder geschlossen werden, bevor der gesamte Feststoff entnommen wurde, so dass hierdurch ein Entweichen von Gas aus dem Reaktor beziehungsweise das Eindringen von Luft in den Reaktor minimiert werden kann.

Als Austragsvorrichtung aus dem Feststoffaustrag der Vorrichtung zur Feinstaubabscheidung eignet sich ebenso wie als Austragsvorrichtung aus der Vorrichtung zur Produktentnahme aus dem Reaktor eine Zellradschleuse, eine Klappe, eine Förderschnecke oder ein Segmentkugelhahn. Das Schließelement im Feststoffaustrag der Vorrichtung zur Feinstaubabscheidung kann zum Beispiel eine Klappe, ein Kugelhahn, ein Segmentkugelhahn, ein Schieber oder ein Ventil sein.

In einer bevorzugten Ausführungsform ist oberhalb des Schließelements mindestens ein Füllstandssensor positioniert. Mit dem Füllstandssensor kann erfasst werden, wann die Feststoffmenge, die in der Vorrichtung zur Feinstaubabtrennung abgeschieden wurde, so groß ist, dass diese entnommen werden muss, um eine störungsfreie Funktion der Vorrichtung zur Feinstaubabtrennung sicherzustellen.

Um zu vermeiden, dass das aus der Vorrichtung zum Produktaustrag und aus dem Feststoffaustrag der Vorrichtung zur Feinstaubabtrennung entnommene Produkt verunreinigt wird und um dieses möglichen nachfolgenden Bearbeitungsschritten zuzuführen, münden vorzugsweise die Vorrichtung zum Produktaustrag und/oder der Feststoffaustrag der Vorrichtung zur Feinstaubabtrennung in eine Saugleitung, durch die das pulverförmige Poly(meth)acrylat pneumatisch weitergefördert wird. Durch die pneumatische Förderung wird sichergestellt, dass das Poly(meth)acrylat nicht mit unerwünschten Fremdstoffen in Kontakt kommt. Insbesondere ist ein Transport in einer abgeschlossenen Rohrleitung möglich. Anstelle von üblicherweise eingesetzter Luft kann für den pneumatischen Transport ein Inertgas, insbesondere Stickstoff, genutzt werden. Bevorzugt ist die Verwendung von Luft als Transportgas.

Die Nachbearbeitung, zu der das Poly(meth)acrylat gefördert wird, ist jede für Poly(meth)acrylate übliche Nachbearbeitung, zum Beispiel eine Nachvernetzung, eine Nach-Additivierung, Mahlen, Siebung oder Sichtung zur Einstellung der Partikelgröße, eine Zwischenlagerung und die Verpackung des Poly(meth)acrylats.

Ein Ausführungsbeispiel der Erfindung ist in der Figur dargestellt und wird in der nachfolgenden Beschreibung näher erläutert.

Die einzige Figur zeigt eine schematische Darstellung der erfindungsgemäßen Vorrichtung.

Ein Reaktor 1 zur Tropfenpolymerisation umfasst einen Reaktorkopf 3, in dem eine Vorrichtung zur Vertropfung 5 aufgenommen ist, einen mittleren Bereich 7, in dem die Polymerisationsreaktion erfolgt und einen unteren Bereich 9 mit einer Wirbelschicht 11, in der die Reaktion abgeschlossen wird.

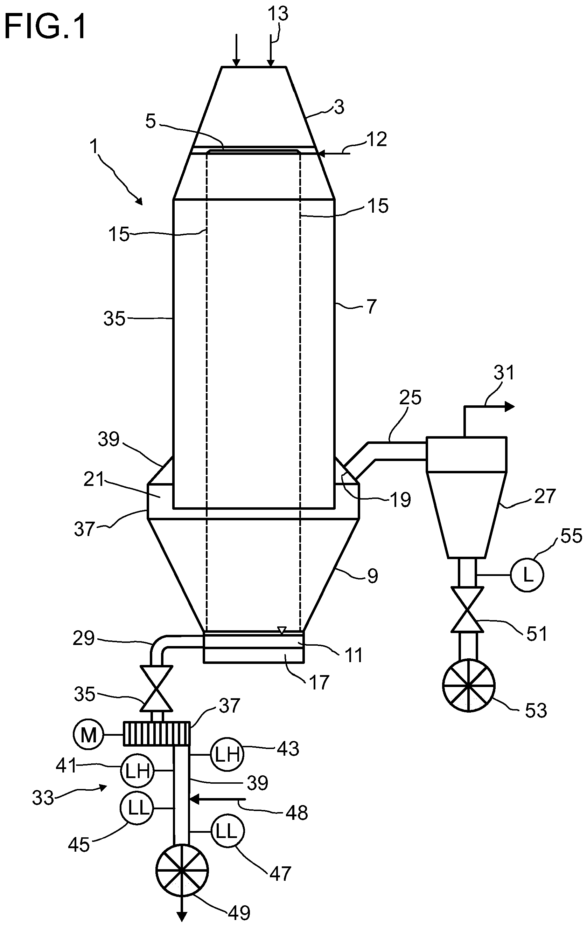

Zur Durchführung der Polymerisationsreaktion zur Herstellung des Poly(meth)acrylats wird der Vorrichtung zur Vertropfung 5 eine Monomerlösung über eine Monomerzufuhr 12 zugeführt. Wenn die Vorrichtung zur Vertropfung 5 mehrere Kanäle aufweist, ist es bevorzugt, jedem Kanal über eine eigene Monomerzufuhr 12 die Monomerlösung zuzuführen. Die Monomerlösung tritt durch in Figur 1 nicht dargestellte Löcher in der Vorrichtung zur Vertropfung 5 aus und zerfällt in einzelne Tropfen, die im Reaktor nach unten fallen. Über eine erste Zugabestelle für ein Gas 13 oberhalb der Vorrichtung zur Vertropfung 5 wird ein Gas, beispielsweise Stickstoff oder Luft, in den Reaktor 1 eingeleitet. Die Gasströmung unterstützt dabei den Zerfall der aus den Löchern der Vorrichtung zur Vertropfung 5 austretenden Monomerlösung in einzelne Tropfen. Zusätzlich wird durch die Gasströmung unterstützt, dass sich die einzelnen Tropfen nicht berühren und zu größeren Tropfen koaleszieren.

Um zum Einen den zylindrischen mittleren Bereich 7 des Reaktors möglichst kurz zu gestalten und zudem zu vermeiden, dass Tropfen an die Wandung des Reaktors 1 prallen, ist der Reaktorkopf 3 vorzugsweise, wie hier dargestellt, konisch ausgebildet, wobei sich die Vorrichtung zur Vertropfung 5 im konischen Reaktorkopf 3 oberhalb des zylindrischen Bereichs befindet. Alternativ ist es allerdings auch möglich, den Reaktor auch im Reaktorkopf 3 zylindrisch mit einem Durchmesser wie im mittleren Bereich 7 zu gestalten. Bevorzugt ist jedoch eine konische Gestaltung des Reaktorkopfs 3. Die Position der Vorrichtung zur Vertropfung 5 wird so gewählt, dass zwischen den äußersten Löchern, durch die die Monomerlösung zugeführt wird und der Wandung des Reaktors noch ein ausreichend großer Abstand ist, um ein Anprallen der Tropfen an die Wandung zu verhindern. Hierzu sollte der Abstand mindestens im Bereich von 50 bis 1500 mm, bevorzugt im Bereich von 100 bis 1250 mm und insbesondere im Bereich von 200 bis 750 mm liegen. Selbstverständlich ist auch ein größerer Abstand zur Wandung des Reaktors möglich. Dies hat jedoch den Nachteil, dass mit einem größeren Abstand eine schlechtere Ausnutzung des Reaktorquerschnittes einhergeht.

Der untere Bereich 9 schließt mit einer Wirbelschicht 11 ab, in die die während des Falls aus den Monomertropfen entstandenen Polymerpartikel fallen. In der Wirbelschicht erfolgt die Nachreaktion zum gewünschten Produkt. Erfindungsgemäß sind die äußersten Löcher, durch die die Monomerlösung vertropft wird, so positioniert, dass ein senkrecht nach unten fallender Tropfen in die Wirbelschicht 11 fällt. Dies kann zum Beispiel dadurch realisiert werden, dass der hydraulische Durchmesser der Wirbelschicht mindestens so groß ist wie der hydraulische Durchmesser der Fläche, die von einer die äußersten Löcher in der Vorrichtung zur Vertropfung 5 verbindenden Linie umschlossen wird, wobei die Querschnittsfläche der Wirbelschicht und die von der die äußersten Löcher verbindenden Linie gebildete Fläche die gleiche Form haben und sich die Mittelpunkte der beiden Flächen in einer senkrechten Projektion aufeinander an derselben Position befinden. Die äußerste Position der äußeren Löcher bezogen auf die Position der Wirbelschicht 11 ist in Figur 1 mit Hilfe einer gestrichelten Linie 15 dargestellt.

Um weiterhin zu vermeiden, dass Tropfen auch im mittleren Bereich 7 an die Wandung des Reaktor prallen, ist der hydraulische Durchmesser auf Höhe der Mitte zwischen der Vorrichtung zur Vertropfung und der Gasentnahmestelle mindestens 10% größer als der hydraulische Durchmesser der Wirbelschicht.

Der Reaktor 1 kann dabei jede beliebige Querschnittsform aufweisen. Bevorzugt ist der Querschnitt des Reaktors 1 jedoch kreisförmig. In diesem Fall entspricht der hydraulische Durchmesser dem Durchmesser des Reaktors 1.

Oberhalb der Wirbelschicht 11 nimmt der Durchmesser des Reaktors 1 in der hier dargestellten Ausführungsform zu, so dass sich der Reaktor 1 im unteren Bereich 9 von unten nach oben konisch erweitert. Dies hat den Vorteil, dass im Reaktor 1 entstandene Polymerpartikel, die auf die Wandung treffen, an der Wandung nach unten in die Wirbelschicht 11 rutschen können. Zur Vermeidung von Anbackungen können zusätzlich hier nicht dargestellte Klopfer außen am konusförmigen Teil des Reaktors vorgesehen sein, mit denen die Wandung des Reaktors in Schwingungen versetzt wird, wodurch sich anhaftende Polymerpartikel lösen und in die Wirbelschicht 11 rutschen.

Zur Gaszufuhr für den Betrieb der Wirbelschicht 11, befindet sich unterhalb der Wirbelschicht 11 ein Gasverteiler 17, durch den das Gas in die Wirbelschicht 11 eingeblasen wird.

Da sowohl von oben als auch von unten Gas in den Reaktor 1 eingeleitet wird, ist es erforderlich, an einer geeigneten Position Gas aus dem Reaktor 1 zu entnehmen. Hierzu ist am Übergang vom mittleren Bereich 7 mit konstantem Querschnitt zum sich konisch von unten nach oben erweiternden unteren Bereich 9 mindestens eine Gasentnahmestelle 19 angeordnet. Hierbei ragt der zylindrische mittlere Bereich 7 mit seiner Wandung in den sich nach oben konisch erweiternden unteren Bereich 9 hinein, wobei der Durchmesser des konischen unteren Bereichs 9 an dieser Position größer ist als der Durchmesser des mittleren Bereichs 7. Hierdurch wird ein die Wandung des mittleren Bereichs 7 umlaufender Ringkanal 21 gebildet, in den das Gas einströmt und durch die mindestens eine Gasentnahmestelle 19, die mit dem Ringkanal 21 verbunden ist, abgezogen werden kann.

Die nachreagierten Polymerpartikel der Wirbelschicht 11 werden über eine Produktentnahmestelle 23 im Bereich der Wirbelschicht entnommen.

Um gegebenenfalls über die Gasentnahmestelle 19 mitgerissene Partikel aus dem Gasstrom zu entfernen, ist die Gasentnahmestelle 19 über einen Gaskanal 25 mit einer Vorrichtung zur Feinstaubabtrennung 27, beispielsweise einem Filter oder einem Zyklon, vorzugsweise einem Zyklon, verbunden. Aus dem Zyklon können dann über eine Feststoffentnahme die aus dem Gas abgetrennten Feststoffpartikel entnommen werden und über einen Gasabzug 31 das von Feststoffen gereinigte Gas.

Für eine gleichmäßige Gasentnahme aus dem Ringkanal 21 ist es bevorzugt, wenn gleichmäßig über den Umfang des Ringkanals 21 verteilt mehrere Gasentnahmestellen 19 vorgesehen sind. Hierbei ist es möglich, dass jede Gasentnahmestelle 19 mit einer Vorrichtung zur Feinstaubabtrennung 27 verbunden ist oder alternativ jeweils mehrere Gasentnahmestellen 19 in eine Vorrichtung zur Feinstaubabtrennung 27 geleitet werden. Bevorzugt ist jedoch eine Gestaltung derart, dass jede Gasentnahmestelle 19 mit einer separaten Vorrichtung zur Feinstaubabtrennung 27 verbunden ist.

Um die Menge an Inertgas, die mit dem Produkt aus dem Reaktor 1 ausgetragen wird beziehungsweise je nach vorliegendem Druckgefälle die Menge an Luft, die in den Reaktor eindringt, zu minimieren und so den Inertgasverbrauch für den Prozess zu reduzieren, umfasst der Reaktor 1 eine Vorrichtung 33 zum Produktaustrag, die ein Aufstausegment 39 und eine Austragsvorrichtung 49 umfasst. Im Aufstausegment sammelt sich Produkt, wobei durch das Aufstauen des Produkts im Aufstausegment 39 eine Kompaktierung erfolgt und die Gasmenge in den Zwischenräumen zwischen den Produktpartikeln reduziert wird. Zudem wirkt das aufgestaute Produkt dichtend, so dass die Gasmenge, die beim Entnehmen des Produkts über die Austragsvorrichtung 49 ausströmen kann, ebenfalls minimiert wird. als Austragsvorrichtung 49 eigenen sich dabei zum Beispiel Zellradschleusen, Klappen, Förderschnecken, Kugelhähne oder Segmentkugelhähne.

Um die abdichtende Wirkung des Produkts im Aufstausegment 39 sicherzustellen, weist dies in der hier dargestellten bevorzugten Ausführungsform Sensoren zur Bestimmung eines ersten oberen Füllstands 41, eines zweiten oberen Füllstands 43, eines ersten unteren Füllstands 45 und eines zweiten unteren Füllstands 47 auf. Hierzu wird bei Erreichen des ersten oberen Füllstands die Entnahme beschleunigt und bei Erreichen des zweiten oberen Füllstandes besteht die Möglichkeit, zum Beispiel mit Hilfe eines Schließelements 35 die Produktzufuhr in das Aufstausegment zu unterbrechen, um ein Überfüllen zu verhindern. Um des weiteren zu vermeiden, dass der Füllstand im Aufstausegment 39 zu niedrig wird und damit die Dichtwirkung durch das aufgestaute Produkt nicht mehr sichergestellt werden kann, wird bei Erreichen des ersten unteren Füllstands 45 die Entnahme verlangsamt, zum Beispiel durch Reduktion der Drehzahl einer als Austragsvorrichtung 49 eingesetzten Zellradschleuse, und bei Erreichen des zweiten unteren Füllstands 47 gestoppt. Hierdurch wird sichergestellt, dass immer Produkt im Aufstausegment enthalten ist.

Zur Verhinderung von Brückenbildung durch das im Aufstausegment 39 aufgestaute Produkt, ist es möglich, über eine Gaszufuhr 48 Gas in das Aufstausegment 39 einzuleiten. Durch das Gas wird das Produkt im Aufstausegment 39 gelockert, so dass dieses das Aufstausegment 39 nicht verstopfen kann. Weiterhin wird durch Verwendung von trockenem Gas erreicht, dass die Gasatmosphäre im Aufstausegment nicht zu feucht und somit Kondensation vermieden wird.

Um große Partikel, die zum Beispiel durch Agglomeration der Produktpartikel oder durch Abfallen von Anbackungen entstehen können, zu zerkleinern, ist es vorteilhaft, wie hier dargestellt, oberhalb des Aufstausegments 39 einen Feststoffzerkleinerer 37, beispielsweise einen Klumpenbrecher, einzusetzen. Durch die Zerkleinerung von Brocken und Agglomeraten im Feststoffzerkleinerer 37 wird auch verhindert, dass die Brocken oder Agglomerate im Aufstausegment hängen bleiben und dieses verstopfen oder die Austragsvorrichtung 49 blockieren. Wenn ein Feststoffzerkleinerer 37 vorgesehen ist, wird dieser vorzugsweise zwischen dem Schließelement 35 und dem Aufstausegment 39 positioniert.

Um weiterhin zu verhindern dass Inertgas über den Feststoffaustrag der Vorrichtung zur Feinstaubabscheidung 27 austreten beziehungsweise je nach vorliegendem Druckgefälle Luft in den Reaktor eindringen kann, weist dieser vorzugsweise ebenfalls ein Schließelement 51 und eine Austragsvorrichtung 53 auf. So lange der Füllstand in der Vorrichtung zur Feinstaubabscheidung 27 niedrig ist, bleibt das Schließelement 51 geschlossen. Hierdurch wird verhindert, dass Feststoff ausgetragen wird und mit dem ausgetragenen Feststoff Inertgas entweichen beziehungsweise je nach vorliegendem Druckgefälle Luft und Sauerstoff in den Reaktor eindringen kann. Zudem führt das Schließelement 51 dazu, dass der Feststoff in der Vorrichtung zur Feinstaubabtrennung 27 aufgestaut wird, so dass diese ebenfalls eine dichtende Wirkung aufweist. Erst bei Erreichen eines bestimmten Füllstandes, der zum Beispiel mit einem Füllstandssensor 55 erfasst werden kann, öffnet das Schließelement 51, beispielsweise ein Ventil, ein Schieber, ein Kugelhahn, ein Segmentkugelhahn oder eine Klappe, und der Feststoff kann zur Austragsvorrichtung 53 gelangen. Die Austragsvorrichtung 53 ist dabei, wie auch die Austragsvorrichtung 49 der Vorrichtung 33 zur Produktentnahme vorzugsweise eine Zellradschleuse, eine Klappe, eine Förderschnecke, ein Kugelhahn oder ein Segmentkugelhahn.

Durch den zusätzlichen Einsatz des Schließelements gelangt der in der Vorrichtung zur Feinstaubabtrennung 27 entfernte Feststoff verdichtet zur Austragsvorrichtung 53, so dass hierdurch bei der Feststoffentnahme der Anteil an Gas, der über den Feststoffaustrag der Vorrichtung zur Feinstaubabtrennung 27 entweichen kann, minimiert wird.

Bezugszeichenliste

1    Reaktor
3    Reaktorkopf
5    Vorrichtung zur Vertropfung
7    mittlerer Bereich
9    unterer Bereich
11   Wirbelschicht
12   Monomerzufuhr
13   Zugabestelle für Gas
15   Position der äußersten Löcher in Bezug zur Wirbelschicht 11
17   Gasverteiler
19   Gasentnahmestelle
21   Ringkanal
23   Produktentnahmestelle
25   Gaskanal
27   Vorrichtung zur Feinstaubabtrennung
29   Feststoffentnahme
31   Gasabzug
33   Vorrichtung zum Produktaustrag
35   Schließelement
37   Feststoffzerkleinerer
39   Aufstausegment
41   erster oberer Füllstand
43   zweiter oberer Füllstand
45   erster unterer Füllstand
47   zweiter unterer Füllstand
48   Gaszufuhr
49   Austragsvorrichtung
51   Schließelement
53   Austragsvorrichtung
55   Füllstandssensor

**Patentansprüche**

1.  Vorrichtung zur Herstellung von pulverförmigem Poly(meth)acrylat, umfassend einen Reaktor (1) zur Tropfenpolymerisation mit einer Vorrichtung (5) zur Vertropfung einer Monomerlösung für die Herstellung des Poly(meth)acrylats mit Löchern, durch die die Monomerlösung eingebracht wird, einer Zugabestelle (13) für ein Gas oberhalb der Vorrichtung (5) zur Vertropfung, mindestens einer Gasentnahmestelle (19) am Umfang des Reaktors (1), einer Wirbelschicht (11) und einer Vorrichtung (33) zum Produktaustrag aus der Wirbelschicht (11), **dadurch gekennzeichnet, dass** die Vorrichtung (33) zum Produktaustrag eine Austragsvorrichtung (49) umfasst, wobei oberhalb der Austragsvorrichtung (49) ein Aufstausegment (39) angeordnet ist, das so ausgestaltet ist, dass sich während des Betriebs Produkt im Aufstausegment sammelt, wobei durch das Aufstauen des Produkts eine Kompaktierung erfolgt und das Aufstausegment so als Gassperre dient und wobei das Aufstausegment (39) einen oberen Sensor zur Erfassung eines maximalen Füllstandes (43) und einen unteren Sensor zur Erfassung eines minimalen Füllstandes (47) aufweist und der untere Sensor so eingerichtet ist, dass der Polymeraustrag beendet wird, sobald der Füllstand den unteren Sensor erreicht.

2.  Vorrichtung gemäß Anspruch 1, **dadurch gekennzeichnet, dass** eine Füllstandsregelung umfasst ist, bei der der obere Sensor einen ersten oberen Füllstand (41) erfasst, bei dessen Erreichen der Zulauf reduziert wird und einen zweiten oberen Füllstand (43), bei dessen Erreichen der Zulauf geschlossen wird und der untere Sensor einen ersten unteren Füllstand (45) erfasst, bei dessen Erreichen der Produktablauf aus der Vorrichtung (33) zum Produktaustrag reduziert wird und einen zweiten unteren Füllstand (47), bei dessen Erreichen die Vorrichtung (33) zum Produktaustrag verschlossen wird, so dass kein Produkt entnommen wird.

3.  Vorrichtung gemäß einem der Ansprüche 1 oder 2, **dadurch gekennzeichnet, dass** oberhalb des Aufstausegments (39) ein Schließelement (35) angeordnet ist.

4.  Vorrichtung gemäß einem der Ansprüche 1 bis 3, **dadurch gekennzeichnet, dass** oberhalb des Aufstausegments (39) ein Feststoffzerkleinerer (37) angeordnet ist.

5.  Vorrichtung gemäß Anspruch 4, **dadurch gekenn-**

zeichnet, dass der Feststoffzerkleinerer (37) ein Klumpenbrecher ist.

6. Vorrichtung gemäß Anspruch 5, **dadurch gekennzeichnet, dass** der Klumpenbrecher ein Fingerbrecher mit Brechgitter und rotierendem Brechwerkzeug ist.

7. Vorrichtung gemäß einem der Ansprüche 1 bis 6, **dadurch gekennzeichnet, dass** die Austragsvorrichtung (49) eine Zellradschleuse, eine Klappe, ein Schneckenförderer oder ein Segmentkugelhahn ist.

8. Vorrichtung gemäß einem der Ansprüche 1 bis 7, **dadurch gekennzeichnet, dass** im Aufstausegment (39) eine Gaszufuhr (48) angeordnet ist, um Gas in das Aufstausegment (39) einzuleiten.

9. Vorrichtung gemäß einem der Ansprüche 1 bis 8, **dadurch gekennzeichnet, dass** die Vorrichtung (33) zum Produktaustrag beheizbar ist.

10. Vorrichtung gemäß Anspruch 9, **dadurch gekennzeichnet, dass** zur Beheizung der Vorrichtung (33) zum Produktaustrag der Feststoffzerkleinerer, das Aufstausegment und/oder die Austragsvorrichtung eine elektrische Beheizung, einen Doppelmantel oder außen aufgebrachte Heizschlangen aufweisen, wobei der Doppelmantel oder die Heizschlangen von einem Heizmedium durchströmbar sind.

11. Vorrichtung gemäß einem der Ansprüche 1 bis 10, **dadurch gekennzeichnet, dass** sich an die Gasentnahmestelle (19) eine Vorrichtung zur Feinstaubabtrennung (27) anschließt und an der Vorrichtung zur Feinstaubabtrennung (27) ein Feststoffaustrag angeordnet ist, der eine Austragsvorrichtung (53) und oberhalb der Austragsvorrichtung (53) ein Schließelement (51) umfasst.

12. Vorrichtung gemäß Anspruch 11, **dadurch gekennzeichnet, dass** die Austragsvorrichtung (53) aus dem Feststoffaustrag der Vorrichtung zur Feinstaubabscheidung (27) eine Zellradschleuse, eine Klappe, eine Förderschnecke oder ein Segmentkugelhahn ist.

13. Vorrichtung gemäß Anspruch 11 oder 12, **dadurch gekennzeichnet, dass** das Schließelement (51) im Feststoffaustrag der Vorrichtung zur Feinstaubabscheidung (27) eine Klappe, ein Schieber, ein Segmentkugelhahn oder ein Ventil ist.

14. Vorrichtung gemäß einem der Ansprüche 11 bis 13, **dadurch gekennzeichnet, dass** oberhalb des Schließelements (51) mindestens ein Füllstandssensor (55) positioniert ist.

15. Vorrichtung gemäß einem der Ansprüche 1 bis 14, **dadurch gekennzeichnet, dass** die Vorrichtung (33) zum Produktaustrag und/oder der Feststoffaustrag der Vorrichtung zur Feinstaubabscheidung (27) in eine Saugleitung münden, durch die das pulverförmige Poly(meth)acrylat pneumatisch weitergefördert wird.

**Claims**

1. Apparatus for production of pulverulent poly(meth)acrylate, comprising a reactor (1) for droplet polymerization which has an apparatus (5) for dropletization of a monomer solution for the production of the poly(meth)acrylate with holes through which the monomer solution is introduced, has an addition point (13) for a gas above the apparatus (5) for dropletization, has at least one gas withdrawal point (19) on the periphery of the reactor (1), has a fluidized bed (11) and has an apparatus (33) for product discharge from the fluidized bed (11), **characterized in that** the apparatus (33) for product discharge comprises a discharge apparatus (49), wherein, above the discharge apparatus (49), there is arranged a backing-up segment (39) which is designed in such a way that, during operation, product accumulates in the backing-up segment, wherein, as a result of the backing-up of the product, compaction occurs and the backing-up segment thus serves as a gas barrier, and wherein the backing-up segment (39) has an upper sensor for detecting a maximum fill level (43) and a lower sensor for detecting a minimum fill level (47), and the lower sensor is configured in such a way that the polymer discharge is ended as soon as the fill level reaches the lower sensor.

2. Apparatus according to Claim 1, **characterized in that** a closed-loop fill-level control system is included, in which closed-loop fill-level control system the upper sensor detects a first upper fill level (41), upon attainment of which the feed is reduced, and a second upper fill level (43), upon attainment of which the feed is closed, and the lower sensor detects a first lower fill level (45), upon attainment of which the product flow out of the apparatus (33) for product discharge is reduced, and a second lower fill level (47), upon attainment of which the apparatus (33) for product discharge is closed, so that no product can be withdrawn.

3. Apparatus according to either of Claims 1 and 2, **characterized in that** a closure element (35) is arranged above the backing-up segment (39).

4. Apparatus according to one of Claims 1 to 3, **characterized in that** a solids comminutor (37) is arranged above the backing-up segment (39).

5. Apparatus according to Claim 4, **characterized in that** the solids comminutor (37) is a lump breaker.

6. Apparatus according to Claim 5, **characterized in that** the lump breaker is a finger breaker with breaking grid and rotating breaking tool.

7. Apparatus according to one of Claims 1 to 6, **characterized in that** the discharge apparatus (49) is a star feeder, a flap, a screw conveyor or a segmented ball valve.

8. Apparatus according to one of Claims 1 to 7, **characterized in that** a gas supply (48) is arranged in the backing-up segment (39) in order for gas to be introduced into the backing-up segment (39).

9. Apparatus according to one of Claims 1 to 8, **characterized in that** the apparatus (33) for product discharge is heatable.

10. Apparatus according to Claim 9, **characterized in that**, for heating the apparatus (33) for product discharge, the solids comminutor, the backing-up segment and/or the discharge apparatus have/has an electrical heating means, a double shell or externally mounted heating coils, wherein the double shell or the heating coils are able to be flowed through by a heating medium.

11. Apparatus according to one of Claims 1 to 10, **characterized in that** the gas withdrawal point (19) is adjoined by an apparatus for fine-dust separation (27), and a solids discharge comprising a discharge apparatus (53) and, above the discharge apparatus (53), a closure element (51) is arranged on the apparatus for fine-dust separation (27).

12. Apparatus according to Claim 11, **characterized in that** the discharge apparatus (53) from the solids discharge of the apparatus for fine-dust separation (27) is a star feeder, a flap, a conveying screw or a segmented ball valve.

13. Apparatus according to Claim 11 or 12, **characterized in that** the closure element (51) in the solids discharge of the apparatus for fine-dust separation (27) is a flap, a slide, a segmented ball valve or some other valve.

14. Apparatus according to one of Claims 11 to 13, **characterized in that** at least one fill-level sensor (55) is positioned above the closure element (51).

15. Apparatus according to one of Claims 1 to 14, **characterized in that** the apparatus (33) for product discharge and/or the solids discharge of the apparatus for fine-dust separation (27) open(s) out into a suction line through which the pulverulent poly(meth)acrylate is pneumatically conveyed onwards.

**Revendications**

1. Dispositif de production de poly(méth)acrylate en poudre, ledit dispositif comprenant un réacteur (1) destiné à la polymérisation de gouttes, ledit réacteur comprenant un dispositif (5) de formation de gouttes d'une solution monomère destinée à la production du poly(méth)acrylate, des trous par lesquels la solution de monomère est introduite, un point d'addition (13) destiné à un gaz et situé au-dessus du dispositif (5) de formation de gouttes, au moins un point d'extraction de gaz (19) à la périphérie du réacteur (1), un lit fluidisé (11) et un dispositif (33) d'évacuation de produit du lit fluidisé (11), **caractérisé en ce que** le dispositif (33) d'évacuation de produit comprend un dispositif d'évacuation (49), un segment d'accumulation (39) étant disposé au-dessus du dispositif d'évacuation (49) et étant conçu de façon à ce que le produit s'accumule dans le segment d'accumulation pendant le fonctionnement, un compactage étant effectué à la suite de l'accumulation du produit et le segment d'accumulation servant ainsi de barrière aux gaz et le segment d'accumulation (39) comportant un capteur supérieur destiné à détecter un niveau de remplissage maximal (43) et un capteur inférieur destiné à détecter un niveau de remplissage minimal (47) et le capteur inférieur étant conçu de façon à ce que l'évacuation de polymère soit terminée dès que le niveau de remplissage atteint le capteur inférieur.

2. Dispositif selon la revendication 1, **caractérisé en ce qu'**une régulation de niveau de remplissage est incluse dans laquelle le capteur supérieur détecte un premier niveau de remplissage supérieur (41), l'alimentation étant réduite lorsque ledit premier niveau de remplissage supérieur est atteint, et un deuxième niveau de remplissage supérieur (43), l'alimentation étant fermée lorsque ledit deuxième niveau de remplissage supérieur est atteint, et le capteur inférieur détecte un premier niveau de remplissage inférieur (45), l'écoulement de produit du dispositif (33) en vue de l'évacuation de produit étant réduit lorsque ledit premier niveau de remplissage inférieur est atteint, et un deuxième niveau de remplissage inférieur (47), le dispositif (33) d'évacuation de produit étant fermé, de sorte qu'aucun produit n'est évacué, lorsque ledit deuxième niveau de remplissage inférieur est atteint.

3. Dispositif selon l'une des revendications 1 ou 2, **caractérisé en ce qu'**un élément de fermeture (35) est disposé au-dessus du segment d'accumulation (39).

**4.** Dispositif selon l'une des revendications 1 à 3, **caractérisé en ce qu'**un broyeur de matières solides (37) est disposé au-dessus du segment d'accumulation (39) .

**5.** Dispositif selon la revendication 4, **caractérisé en ce que** le broyeur de matières solides (37) est un broyeur anti-grumeaux.

**6.** Dispositif selon la revendication 5, **caractérisé en ce que** le broyeur anti-grumeaux est un broyeur à doigts pourvu d'une grille de broyage et d'outil de broyage rotatif.

**7.** Dispositif selon l'une des revendications 1 à 6, **caractérisé en ce que** le dispositif d'évacuation (49) est une écluse à roue cellulaire, un clapet, un convoyeur à vis sans fin ou une vanne à boisseau sphérique.

**8.** Dispositif selon l'une des revendications 1 à 7, **caractérisé en ce qu'**une alimentation en gaz (48) est disposée dans le segment d'accumulation (39) pour introduire du gaz dans le segment d'accumulation (39).

**9.** Dispositif selon l'une des revendications 1 à 8, **caractérisé en ce que** le dispositif (33) d'évacuation de produit peut être chauffé.

**10.** Dispositif selon la revendication 9, **caractérisé en ce que**, pour chauffer le dispositif (33) d'évacuation de produit, le broyeur de matières solides, le segment d'accumulation et/ou le dispositif d'évacuation comportent un chauffage électrique, une double enveloppe ou des serpentins chauffants appliqués extérieurement, un fluide chauffant pouvant circuler à travers la double enveloppe ou les serpentins chauffants.

**11.** Dispositif selon l'une des revendications 1 à 10, **caractérisé en ce qu'**un dispositif de séparation de poussières fines (27) est raccordé au point d'extraction de gaz (19) et une évacuation de matières solides, qui comprend un dispositif d'évacuation (53) et, au-dessus du dispositif d'évacuation (53), un élément de fermeture (51), est disposée au niveau du dispositif de séparation de poussières fines (27).

**12.** Dispositif selon la revendication 11, **caractérisé en ce que** le dispositif d'évacuation (53) en sortie de l'évacuation de matières solides du dispositif de séparation de poussières fines (27) est une écluse à roue cellulaire, un clapet, un convoyeur à vis sans fin ou une vanne à boisseau sphérique.

**13.** Dispositif selon la revendication 11 ou 12, **caractérisé en ce que** l'élément de fermeture (51) dans l'évacuation de matières solides du dispositif de séparation de poussières fines (27) est un clapet, un tiroir, une vanne à boisseau sphérique ou une soupape.

**14.** Dispositif selon l'une des revendications 11 à 13, **caractérisé en ce qu'**au moins un capteur de niveau de remplissage (55) est positionné au-dessus de l'élément de fermeture (51).

**15.** Dispositif selon l'une des revendications 1 à 14, **caractérisé en ce que** le dispositif (33) d'évacuation de produits et/ou l'évacuation de matières solides du dispositif de séparation de poussières fines (27) débouchent dans une conduite d'aspiration qui permet de transporter le poly(méth)acrylate pneumatiquement.

FIG.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006079631 A
- WO 2008086976 A
- WO 2007031441 A
- WO 2008040715 A
- WO 2010003855 A
- WO 2011026876 A